(19) Europäisches Patentamt / European Patent Office / Office européen des brevets

(11) **EP 2 343 905 A2**

(12) **EUROPEAN PATENT APPLICATION**

(43) Date of publication:
**13.07.2011 Bulletin 2011/28**

(51) Int Cl.:
*H04N 13/00* (2006.01)   *H04N 13/04* (2006.01)

(21) Application number: **10193937.9**

(22) Date of filing: **07.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.01.2010 JP 2010004175**

(71) Applicant: **Sony Corporation
Tokyo 108-0075 (JP)**

(72) Inventors:
• **Miyazaki, Shigeki
  Minato-ku, Tokyo 108-0075 (JP)**
• **Sato, Yoshihisa
  Minato-ku, Tokyo 108-0075 (JP)**
• **Chiba, Atsuhiro
  Minato-ku Tokyo 108-0075 (JP)**

(74) Representative: **Davies, Simon Robert
D Young & Co LLP
120 Holborn
London, EC1N 2DY (GB)**

(54) **Video display system**

(57) A video display system includes a video display unit time-divisionally performing switching between a plurality of video streams to display the video streams, thereby emitting linear polarized display light; and shutter eyeglasses performing switching between open state to transmit incident light and closed state to block the incident light in synchronization with the switching between the video streams in the video display unit, each eyeglass in the shutter eyeglasses including a liquid crystal device, an entrance-side polarization plate provided on a light entrance side of the liquid crystal device and an exit-side polarization plate provided on a light exit side thereof. Polarization degree in the entrance-side polarization plate is lower than that in the exit-side polarization plate.

FIG. 1

EP 2 343 905 A2

**Description**

The present invention relates to a video display system for displaying video streams using shutter eyeglasses.

As a stereoscopic display method using an electronic information display, various methods exist. Specially, the method using shutter eyeglasses has attracted attentions. In such a method, a left-eye parallax image and a right-eye parallax image are time-divisionally switched and displayed on a liquid crystal display such as a liquid crystal television. The respective parallax images are separated to a left eye and a right eye by using the shutter eyeglasses capable of switching between opening and closing of the right and left eyeglasses in synchronization with the switching between images.

In the shutter eyeglasses, for example, a liquid crystal device with light transmittance controllable by applying a voltage is used. Each polarization plate is respectively attached to the entrance side of the liquid crystal device (liquid crystal display side) and the exit side (observer side). In the case where linear polarized light is used in such shutter eyeglasses, light axis (transmission axis) of the polarization plate on the entrance side thereof should correspond with light axis (transmission axis) of a polarization plate on the exit side in the liquid crystal display. In such a system, an observer (viewer) wears the shutter eyeglasses and observes a display image on the display, and therefore stereoscopic viewing is enabled.

In a stereoscopic video display system using the shutter eyeglasses, in some cases, in an environment in which a video is observed, interference with a room illuminated light or the like is generated, and flicker is observed. In particular, in the case where 60 Hz driven shutter eyeglasses are used under a low frequency driven fluorescent lamp without using an inverter such as a 50 Hz driven (light output: 100 Hz) fluorescent lamp, significant flicker of about 40 Hz is shown due to interference. Such a state significantly irritates an observer, and induces fatigue. In addition, it is highly probable that a certain kind of seizure is caused through a sense. Thus, such a state is a concern in view of human engineering.

It is known that the foregoing flicker is decreased by totally removing the polarization plate on the entrance side in the shutter eyeglasses (for example, Japanese Unexamined Patent Application Publication No. 8-327961). In this case, in the case where light axis of the polarization plate on the exit side in the liquid crystal display corresponds with light axis of the polarization plate on the exit side in the shutter eyeglasses, video vision is not affected thereby.

However, in the case where the polarization plate on the entrance side in the shutter eyeglasses is totally removed in order to eliminate flicker as described above, if an observer tilts the head, light axis of the polarization plate on the exit side in the liquid crystal display is shifted from light axis of the polarization plate on the exit side in the shutter eyeglasses. If light axis shift occurs, contrast in the shutter eyeglasses is shifted from the maximum value (contrast is lowered), and crosstalk is generated between a right parallax image and a left parallax image. In the case where such crosstalk is generated, the observer is given an unpleasant impression such as ghost as the foregoing flicker.

According to an embodiment of the invention, there is provided a video display system including a video display unit time-divisionally performing switching between a plurality of video streams to display the video streams, thereby emitting linear polarized display light; and shutter eyeglasses performing switching between open state to transmit incident light and closed state to block the incident light in synchronization with the switching between the video streams in the video display unit. Each shutter eyeglass in the shutter eyeglasses includes a liquid crystal device, a entrance-side polarization plate provided on a light entrance side of the liquid crystal device and an exit-side polarization plate provided on a light exit side. Polarization degree in the entrance-side polarization plate is lower than that in the exit-side polarization plate.

In the video display system of the embodiment of the invention, in the shutter eyeglasses, the polarization degree of the shutter entrance-side polarization plate is lower than the polarization degree of the shutter exit-side polarization plate. In some cases, at the time of video observation, flicker is generated due to interference with a room illuminated light or the like. The flicker is able to be eliminated by removing the shutter entrance-side polarization plate. However, in this case, in the case where an observer wearing the shutter eyeglasses tilts the head, contrast of the shutter eyeglasses is lowered, and crosstalk is generated among a plurality of video streams. Tradeoff relation exists between flicker generation and crosstalk generation with respect to the polarization degree of the shutter entrance-side polarization plate. Since the polarization degree on the entrance side is lower than the polarization degree on the exit side in the shutter eyeglasses, degree of flicker generation and crosstalk generation having the foregoing relation is easily optimized.

According to the video display system of the embodiment of the invention, in the shutter eyeglasses, the polarization degree of the shutter entrance-side polarization plate is lower than the polarization degree of the shutter exit-side polarization plate. Thus, in the observed video, while flicker generation is inhibited, crosstalk is able to be decreased. Further, thereby high quality video display (for example, stereoscopic video display) not giving an irritating impression and fatigue to the observer is able to be realized.

The present approach helps to provide a video display system that is able to decrease crosstalk while inhibiting generation of flicker.

Other and further objects, features and advantages of the invention will appear more fully from the following description.

Embodiments of the invention will now be described with reference to the accompanying drawings, throughout which like parts are referred to by like references, and in which:

FIG. 1 is a block diagram illustrating an entire structure of a video display system according to an embodiment of the invention.

FIG. 2 is a schematic view for explaining transmission axes of polarization plates provided on each face of the liquid crystal display panel and the shutter eyeglasses illustrated in FIG. 1.

FIGS. 3A and 3B are schematic views illustrating general outline of stereoscopic video display operation in the video display system illustrated in FIG. 1.

FIGS. 4A to 4C are diagrams of analyzing flicker generated by interference between video light and room illuminated light.

FIG. 5 is a diagram illustrating a relation between shutter aperture duty and LD ratio of illumination.

FIG. 6 is a diagram illustrating a relation between contrast of a shutter entrance-side polarization plate and flicker.

FIGS. 7A and 7B are diagrams for explaining polarization degree dependability of crosstalk (average value) and eyeglasses contrast.

FIG. 8 is a schematic view for explaining state in the case that the shutter eyeglasses are erected and state in the case that the shutter eyeglasses are rotated (tilted).

FIG. 9 is a diagram illustrating a relation between contrast of the shutter entrance-side polarization plate and crosstalk.

FIGS. 10A and 10B are diagrams summarizing subjective evaluation on presence of tolerance of flicker and crosstalk.

FIGS. 11A and 11B are schematic views illustrating general outline of multi video display operation in a video display system according to a modified example of the invention.

DETAILED DESCRIPTION

An embodiment of the invention will be described in detail with reference to the drawings. The description will be given in the following order.

1. Embodiment (example of a shutter entrance-side polarization plate having low polarization degree in a stereoscopic video display system)
2. Modified example (example of the foregoing shutter eyeglasses applied to a multi video display system)

Embodiment

Whole structure of video display system

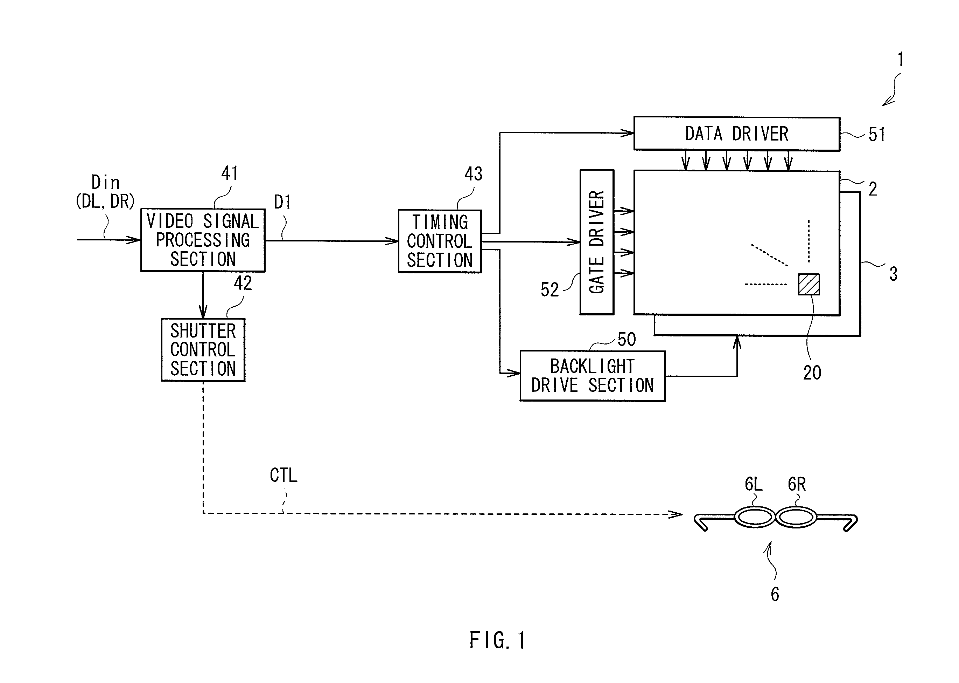

FIG. 1 illustrates a block structure of a video display system according to an embodiment of the invention. The video display system is a time divisional driving method stereoscopic video display system. The video display system includes a liquid crystal display unit 1 as a video display unit and shutter eyeglasses 6.

Liquid crystal display unit 1

The liquid crystal display unit 1 displays a video based on an input video signal Din composed of a right-eye video signal DR and a left-eye video signal DL having right and left parallax. The liquid crystal display unit 1 has a liquid crystal display panel 2, a backlight 3, a video signal processing section 41, a shutter control section 42, a timing control section 43, a backlight drive section 50, a data driver 51, and a gate driver 52.

The backlight 3 is a light source that illuminates the liquid crystal display panel 2 with light. For example, the backlight 3 includes an LED (Light Emitting Diode), a CCFL (Cold Cathode Fluorescent Lamp) or the like.

The liquid crystal display panel 2 modifies the illuminated light from the backlight 3 based on a drive signal supplied from the gate driver 52 and a video voltage supplied from the data driver 51, thereby displaying a video based on the input video signal Din. Specifically, although detailed description will be given later, a right-eye video based on the right-eye video signal DR and a left-eye video based on the left-eye video signal DL are time-divisionally and alternately displayed, and therefore time divisional driving for stereoscopic video display is performed. In this embodiment, the liquid crystal display panel 2 displays a video by using linear polarized light. Respective linear polarization plates described later are attached to the light entrance face thereof and the light output face thereof.

In the liquid crystal display panel 2, a liquid crystal layer composed of, for example, VA (Vertical Alignment) mode liquid crystal or TN (Twisted Nematic) mode liquid crystal is sandwiched between a TFT substrate and an opposed substrate. The liquid crystal display panel 2 includes a plurality of pixels 20 arranged in a matrix form as a whole. The respective pixels 20 include a TFT (Thin Film Transistor) device, and are connected to a gate line for line-sequentially selecting a drive target pixel, a data line for supplying a video voltage to the selected pixel, and an auxiliary capacity line and the like. The TFT device is a switching device for supplying a video voltage based on a video signal D1, and is composed of, for example, an MOS-FET (Metal Oxide Semiconductor-Field Effect Transistor).

The video signal processing section 41 controls output sequence (display sequence) of the right-eye video signal DR and the left-eye video signal DL based on the input video signal Din, thereby generating the video signal D1. In this case, the video signal processing section 41 generates the video signal D1 in which the left-eye video signal DL and the right-eye video signal DR are alternately arranged in one frame time period.

The shutter control section 42 outputs a timing control signal (control signal CTL) corresponding to output timing of the right-eye video signal DR and the left-eye video signal DL by the video signal processing section 41 to the shutter eyeglasses 6. The control signal CTL may be a wireless signal (for example, an infrared signal or the like) as illustrated in FIG. 1, or may be a wired signal.

The timing control section 43 controls drive timing of the backlight drive section 50, the gate driver 52, and the data driver 51, and supplies the video signal D1 supplied from the video signal processing section 41 to the data driver 51.

The gate driver 52 line-sequentially drives the respective pixels 20 in the liquid crystal display panel 2 according to timing control by the timing control section 43.

The data driver 51 supplies a video voltage based on the video signal D1 supplied from the timing control section 43 to the respective pixels 20 of the liquid crystal display panel 2. Specifically, D/A (digital/analog) conversion is performed on the video signal D1, and therefore a video signal as an analog signal (the foregoing video voltage) is generated and is outputted to the respective pixels 20.

The backlight drive section 50 controls lighting operation (light emitting operation) of the backlight 3 according to timing control by the timing control section 43.

Shutter eyeglasses 6

The shutter eyeglasses 6 enables stereoscopic vision when an observer (viewer) of the liquid crystal display unit 1 uses the shutter eyeglasses 6. The shutter eyeglasses 6 have a left-eye lens 6L and a right-eye lens 6R that correspond to a specific example of a "shutter mechanism". The left-eye lens 6L and the right-eye lens 6R are provided with, for example, a liquid crystal shutter (liquid crystal shutter 60 described later). In the liquid crystal shutter, for example, TN mode liquid crystal or STN (Super Twisted Nematic) mode liquid crystal is sandwiched between a pair of electrodes (not illustrated). Transmittance in regard to incident light is controlled by applying a voltage to the liquid crystal through the pair of electrodes. Operation of transmitting incident light (open operation) and operation of blocking incident light (closed operation) by the liquid crystal shutter are time-divisionally controlled by the control signal CTL supplied from the shutter control section 42.

Specifically, the shutter control section 42 drives the shutter eyeglasses 6 so that open state and closed state of the left-eye lens 6L and the right-eye lens 6R are alternately switched in synchronization with display switch between a left-eye video and a right-eye video. In other words, in the display time period of the left-eye video, the shutter control section 42 controls the left-eye lens 6L to be opened and the right-eye lens 6R to be closed. Meanwhile, in the display time period of the right-eye video, the shutter control section 42 controls the right-eye lens 6R to be opened and the left-eye lens 6L to be closed. Therefore, it becomes possible that the right-eye video is observed by a right eye and the left-eye video is observed by a left eye respectively in the time divisional driving method in which one frame time period is divided into two to alternately switch between the right-eye video and the left-eye video and display the same.

Further, the shutter control section 42 controls open/closed operation of the left-eye lens 6L and the right-eye lens 6R based on given open/closed duty in one frame time period. It is desirable that the shutter control section 42 perform control so that each aperture duty (open time period) of the left-eye lens 6L and the right-eye lens 6R becomes about 10% to 50% out of the half-divided time period of one frame. In the same manner as in the foregoing liquid crystal display panel 2, the after-mentioned linear polarization plates are respectively attached to the entrance face and the output face of the foregoing shutter eyeglasses 6.

Structure of polarization plate

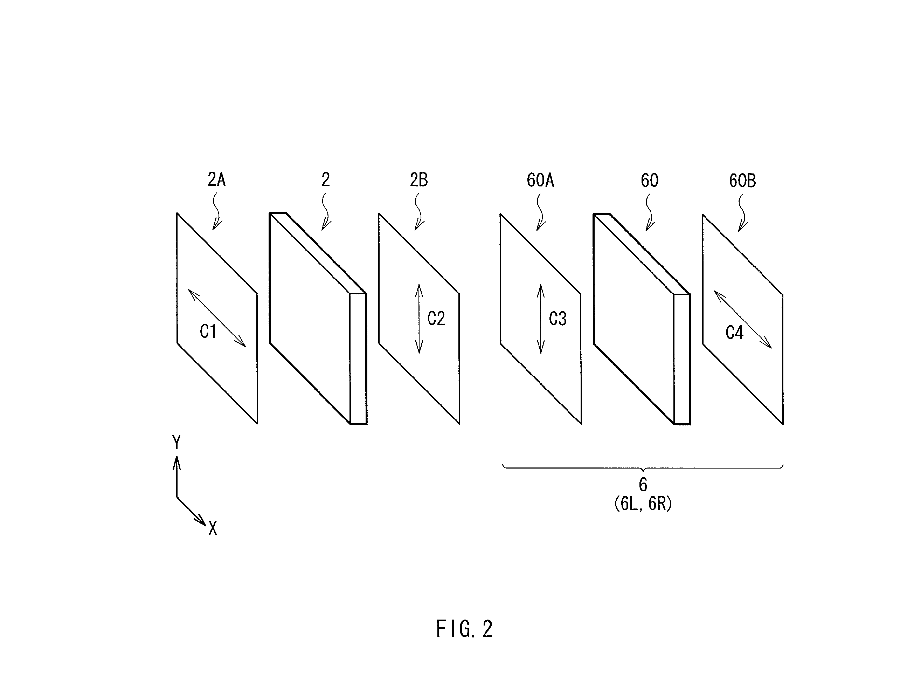

FIG. 2 schematically illustrates polarization plates provided for the respective entrance faces and the respective output faces of the liquid crystal display panel 2 and the liquid crystal shutter 60 and their light axes (transmission axes). In FIG. 2, arrows (C1 to C4) illustrated in the respective polarization plates indicate respective transmission axis directions of the respective polarization plates. As described above, a panel entrance-side polarization plate 2A is provided on the entrance side (back light 3 side) of the liquid crystal display panel 2, and a panel exit-side polarization plate 2B is provided on the exit side (display side) of the liquid crystal display panel 2. In the shutter eyeglasses 6, a shutter entrance-side polarization plate 60A is provided on the entrance side (liquid crystal display panel 2 side) of the liquid crystal shutter 60, and an exit-side polarization plate 60B is provided on the exit side (observer side) of the liquid crystal shutter 60.

In the liquid crystal display panel 2, for example, the panel entrance-side polarization plate 2A and the panel exit-side polarization plate 2B are arranged so that the respective transmission axes C1 and C2 are perpendicular to each other (in a state of crossed nicols). In the shutter eyeglasses 6, similarly, for example, the shutter entrance-side polarization plate 60A and the shutter exit-side polarization plate 60B are arranged so that the respective transmission axes C3 and C4 are perpendicular to each other.

Of the foregoing transmission axes, the transmission axis C2 of the panel exit-side polarization plate 2B corresponds with the transmission axis C3 of the shutter entrance-side polarization plate 60A based on a state that the liquid crystal display unit 1 is arranged being kept upright on XZ plane, and the shutter eyeglasses 6 are erected with the entrance face thereof opposed to the liquid crystal panel 2 side. Specifically, it is assumed that in the case where the horizontal direction of the display screen is X and the vertical direction thereof is Y, an observer wears the shutter eyeglasses 6 in a state that the observer faces the display screen and stands erect or sits without tilting the head along Y direction.

In this embodiment, the shutter entrance-side polarization plate 60A is set to have lower contrast (lower polarization degree) than that of the shutter exit-side polarization plate 60B. Specifically, the polarization degree of the shutter entrance-side polarization plate 60A is desirably from 0.200 to 0.900 both inclusive, and more desirably 0.375 or 0.524. In other words, the contrast of the shutter entrance-side polarization plate 60A is desirably from 1.5 to 19 both inclusive, and more desirably 2.2 or 3.2, where polarization plate contrast is regarded as (transmittance of transmission axis)/ (transmittance of absorption axis). The polarization degree of the shutter exit-side polarization plate 60B is, for example, about 0.998 or more (contrast is 1000 deg or more). In the specification, the foregoing numerical values and the foregoing numerical ranges in the polarization degree and the contrast are approximate values obtained based on the aftermentioned examples. This embodiment is able to be applied not only to a case that the polarization degree and the contrast values are totally identical with the foregoing values, but also to a case that somewhat error exists. Meanwhile, contrast in the panel entrance-side polarization plate 2A and the panel exit-side polarization plate 2B is, for example, 1000 or more, and specifically about 5000.

Action and effect of video display system

Stereoscopic video display operation

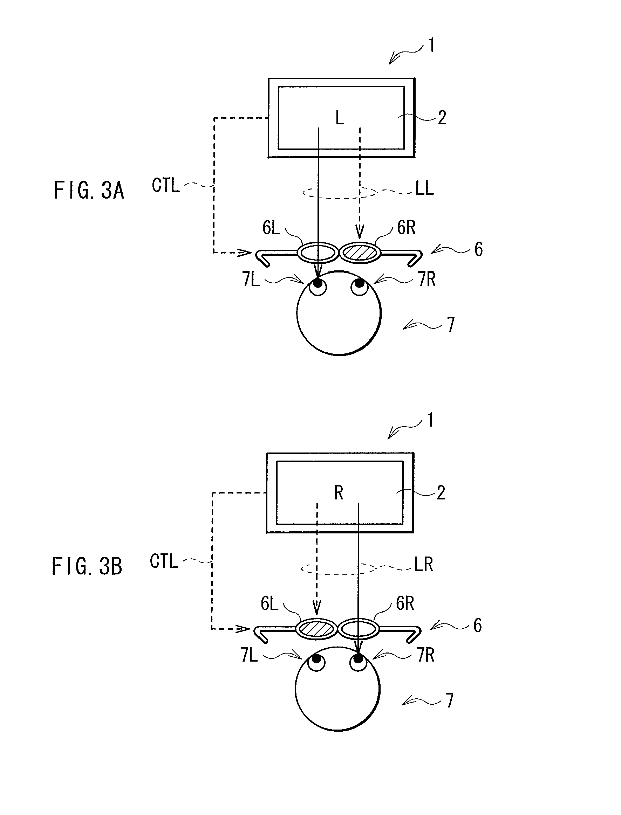

FIGS. 3A and 3B illustrate general outline of stereoscopic video display operation in the video display system. In the video display system, in the liquid crystal display unit 1 illustrated in FIG. 1, the video signal processing section 41 controls output sequency of the right-eye video signal DR and the left-eye video signal DL based on the input video signal Din, thereby generating the video signal D1. The video signal D1 is supplied to the data driver 51 through the timing control section 43. Meanwhile, the shutter control section 42 outputs the control signal CTL corresponding to output timing of the right-eye video signal DR and the left-eye video signal DL to the shutter eyeglasses 6. The data driver 51 performs D/A conversion on the video signal D1, and generates a video voltage as an analog signal. Display drive operation is performed by a drive voltage to each pixel 20 outputted from the gate driver 52 and the data driver 51.

In the pixel 20 supplied with the video voltage as described above, the illuminated light from the backlight 3 is modulated in the liquid crystal display panel 2 and is outputted as display light. Therefore, video display based on the input video signal Din is performed in the liquid crystal display unit 1. More specifically, the left-eye video based on the left-eye video signal DL and the right-eye video based on the right-eye video signal DR are alternately displayed in one frame time period, and therefore display drive operation by time divisional driving is performed. For example, drive frequency of the left-eye lens 6L and the right-eye lens 6R is respectively 60 Hz. In this case, high speed time divisional driving is performed at 120 Hz in total thereof.

Specifically, in the display time period of the left-eye video, the shutter control section 42 controls the left-eye lens 6L to be opened (transmission state of display light LL) and the right-eye lens 6R to be closed (block state of the display light LL) in the shutter eyeglasses 6 by the control signal CTL. Meanwhile, as illustrated in FIG. 3B, in the display time period of the right-eye video, the shutter control section 42 controls the left-eye lens 6L to be closed (block state of display light LR) and the right-eye lens 6R to be opened (transmission state of the display light LR) by the control signal CTL. Open/closed operation of the right and left shutter in synchronization with switching between display videos as described above is time-divisionally and alternately repeated.

An observer 7 wears the shutter eyeglasses 6 that are time-divisionally driven as described above and observes the display screen of the liquid crystal display unit 1, and therefore the left-eye video is recognized by a left eye 7L and the right-eye video is recognized by a right eye 7R respectively. Since parallax exists between the left-eye video and the right eye video, the observer 7 recognizes the foregoing videos as a stereoscopic video with depth feel according to the parallax amount.

Action by the shutter entrance-side polarization plate 60B

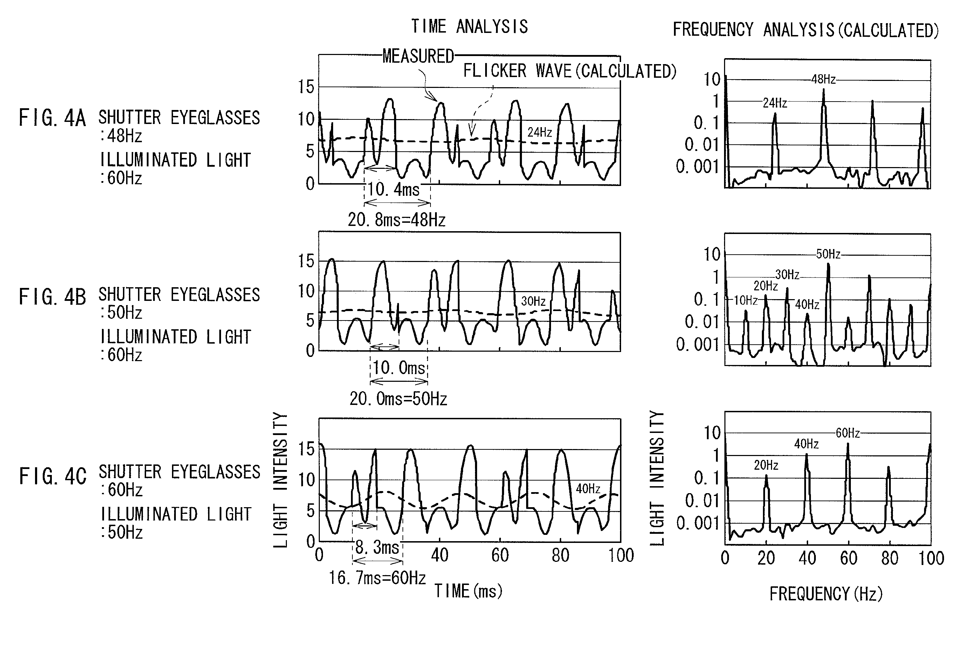

In the case where linear polarized light is used in the shutter eyeglasses 6, if a video is observed under specific room illuminated light, flicker is generated in the observed video in some cases. Specific examples thereof include a case using the shutter eyeglasses 6 under a low frequency driven fluorescent lamp without using an inverter. In this case, it is often the case that the drive frequency of the room illuminated light is close to the drive frequency of the shutter eyeglasses 6. As a result, beat corresponding to difference between respective frequencies is generated, and significant flicker is viewed. FIG. 4A to 4C illustrates an example thereof. As illustrated in FIG. 4A, in the case where the drive frequency of the shutter eyeglasses 6 is 48 Hz and the drive frequency of the room illuminated light is 60 Hz (optical output is 120 Hz), 24 Hz flicker is generated due to interference. Further, as illustrated in FIG. 4B, in the case where the drive frequency of the shutter eyeglasses 6 is 50 Hz and the drive frequency of the room illuminated light is 60 Hz (optical output is 120 Hz), frequency of generated flicker is 30 Hz. Further, as illustrated in FIG. 4C, in the case where the drive frequency of the shutter eyeglasses 6 is 60 Hz and the drive frequency of the room illuminated light is 50 Hz (optical output is 100 Hz), 40 Hz significant flicker is generated. In addition, as the foregoing flicker, various frequency flickers are generated resulting from the drive frequency of the shutter eyeglasses 6 and its high harmonic and the drive frequency of the room illuminated light and its harmonic. Further, high harmonic of such generated flickers is involved therein and therefore many frequency flickers are observed. Such flickers significantly irritate an observer, and induce fatigue.

The foregoing flicker generation is able to be prevented by totally removing the polarization plate on the entrance side in the shutter eyeglasses 6 (shutter entrance-side polarization plate 60A in FIG. 2). Further, even in this case where the polarization plate on the entrance side is removed, if the transmission axis of the polarization plate on the exit side (panel exit-side polarization plate 2B) in the liquid crystal display 1 corresponds with the transmission axis of the polarization plate on the exit side (shutter exit-side polarization plate 60B) in the shutter eyeglasses 6, video vision is not affected thereby.

However, in the case where the shutter entrance-side polarization plate 60B is totally removed, if an observer tilts the head even if only slightly, the transmission axis of the polarization plate on the exit side in the liquid crystal display 1 is shifted from the transmission axis of the polarization plate on the exit side in the shutter eyeglasses 6. As a result, contrast of the shutter eyeglasses 6 themselves is easily shifted from the maximum value thereof (contrast is easily lowered), and significant crosstalk is generated between a left-eye video and a right-eye video. In the case where such crosstalk is generated, the observer is given an unpleasant impression and fatigue such as ghost as the foregoing flicker.

Thus, in this embodiment, in the shutter eyeglasses 6, contrast CR (polarization degree) of the shutter entrance-side polarization plate 60A is set to a lower value than contrast CR (polarization degree) of the shutter exit-side polarization plate 60B. For example, the polarization degree in the shutter entrance-side polarization plate 60A is from 0.200 to 0.900 both inclusive, and the polarization degree in the shutter exit-side polarization plate 60B is 0.998 or more. Therefore, a generation state of flicker and crosstalk that has the after-mentioned relation is able to be respectively optimized to the degree with which no irritating impression is given to the observer.

The relation as shown in the following expressions 1 and 2 exists between the contrast CR of the polarization plate and polarization degree v, where transmittance of the transmission axis of the polarization plate is Ta ($0 \leq Ta \leq 100$), transmittance of the absorption axis of the polarization plate is Tb ($0 \leq Tb \leq 100$), and definition is made as $TP = (Ta^2 + Tb^2)/2$ and $TC = Ta*Tb$. In this case, the contrast CR of the polarization plate is a ratio between the transmittance Ta of the transmission axis and the transmittance Tb of the absorption axis.

$$CR = Ta/Tb = (1+V)/(1-V) \quad 1$$

$$V = \sqrt{((TP-TC)/(TP+TC))} = (CR-1)/(CR+1) \quad 2$$

In the case where the contrast CR of the shutter entrance-side polarization plate 60A is lowered, the contrast of the shutter eyeglasses 6 themselves is lowered. Thus, the contrast to the room illuminated light is relatively lowered, and flicker is not highly visible. Meanwhile contrast in the display video is subject to the panel exit-side polarization plate 2B and the shutter exit-side polarization plate 60B. Thus, even if the contrast of the shutter entrance-side polarization plate 60A is set low, high contrast is remained in the display video. However, even in this case, in the case where the transmission axis C2 in the panel exit-side polarization plate 2B is shifted from the transmission axis C3 of the shutter entrance-side polarization plate 60A due to tilted head of the observer or the like, if the contrast of the shutter entrance-side polarization plate 60A is low, crosstalk is generated in some cases. In other words, there is a tendency that as the contrast CR of the shutter entrance-side polarization plate 60A is lower, flicker is more decreased but crosstalk is more increased. In other words, tradeoff relation exists between flicker generation and crosstalk generation with respect to the contrast of the shutter entrance-side polarization plate 60A.

Thus, it is desirable that the contrast CR of the shutter entrance-side polarization plate 60A is set to an effective value at which both flicker and crosstalk are able to be tolerable. Specifically, in the case where the contrast CR of the shutter entrance-side polarization plate 60A is 2.2 or 3.2 (polarization degree is 0.375 or 0.524), both flicker and crosstalk become tolerable for the observer. Thus, the observer is hardly given an unpleasant impression and fatigue at the time of observation.

As described above, in this embodiment, in the shutter eyeglasses 6, the contrast CR of the shutter entrance-side polarization plate 60A is set to a lower value than the contrast CR of the shutter exit-side polarization plate 60B. Thus, in the observed video, while flicker generation is inhibited, crosstalk is able to be decreased. Further, therefore high quality video display (for example, stereoscopic video display) not giving an irritating impression and fatigue to the observer is able to be realized.

Examples

A description will be given of specific examples (Examples 1 to 3) in this embodiment. As Examples 1 to 3, the shutter eyeglasses 6 with the contrast CR different from each other were fabricated. Generation state of flicker and crosstalk in the fabricated shutter eyeglasses 6 was quantitatively examined, and was subjectively evaluated by human eyes. The contrast CR in the shutter entrance-side polarization plate 60A was 9.8 in Example 1, 3.2 in Example 2, and 2.2 in Example 3. As the backlight 3, an LED was used and driven in a manner of blinking (duty in lighting time period: 25%). The shutter aperture duty in the shutter eyeglasses 6 was 50% except for the case particularly mentioned. Further, for a case that a high contract (CR=1000) polarization plate was provided on the shutter entrance side as Comparative example 1 of these Examples 1 to 3 and a case that a polarization plate was not provided on the shutter entrance side as Comparative example 2, measurement similar to that of Examples 1 to 3 was performed.

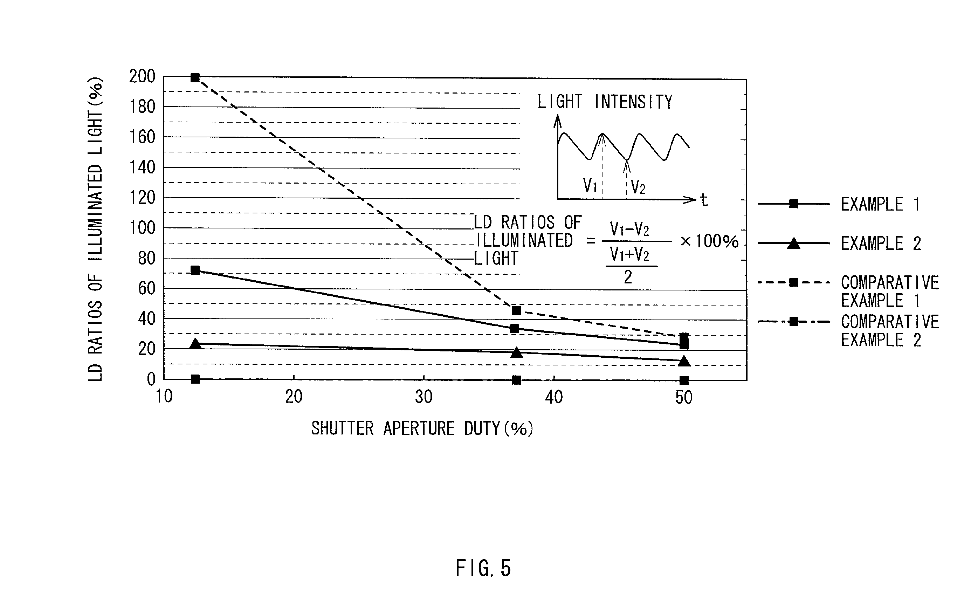

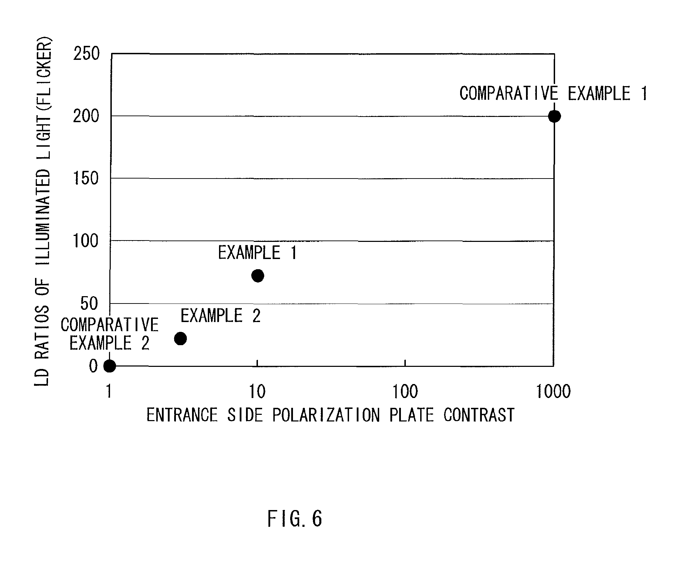

FIG. 5 illustrates LD ratios of illuminated light for each case in which the shutter aperture duty was from 10% to 50% both inclusive for Examples 1 and 2 and Comparative examples 1 and 2. FIG. 6 illustrates a relation between the contrast CR of the shutter entrance-side polarization plate 60A and an LD ratio of illuminated light in the case where the shutter aperture duty in FIG. 5 was 12.5%. The LD ratio of illuminated light is expressed by the following expression 3, where the maximum value in light intensity of room illuminated light or the like is $V_1$ and the minimum value is $V_2$. It was found that flicker was significantly generated in Comparative example 1 with the higher contrast CR of the shutter entrance-side polarization plate 60A, and that flicker was more decreased as the contrast CR was lowered (Comparative example 1>Example 1>Example 2> Comparative example 2).

$$[(V_1 - V_2)/\{(V_1 + V_2)/2\}]*100 \qquad 3$$

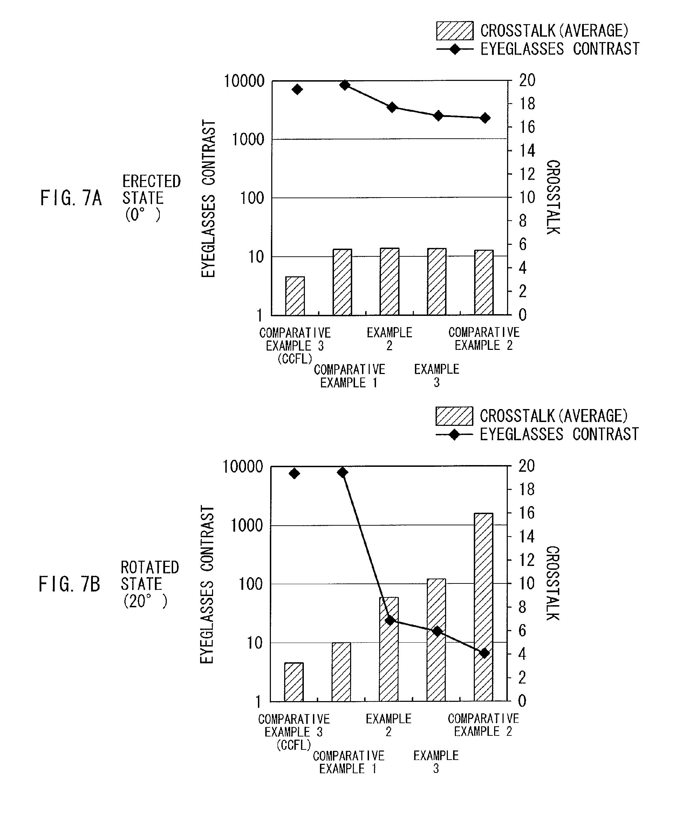

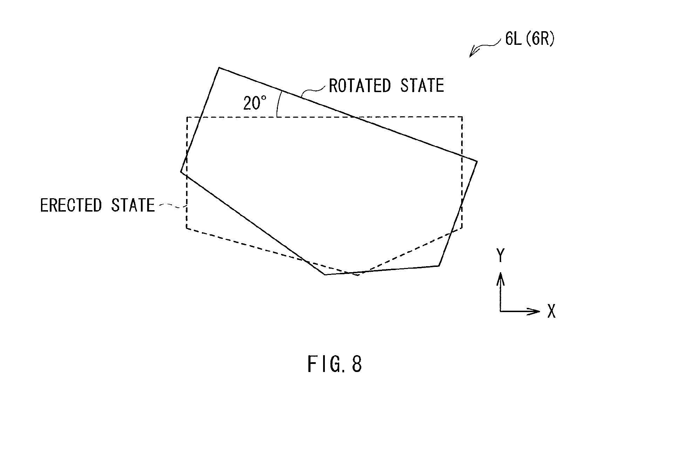

FIGS. 7A and 7B illustrate crosstalk and contrast of the shutter eyeglasses 6 themselves (eyeglass contrast) in the case that the shutter eyeglasses 6 were in an erected state and in the case that the shutter eyeglasses 6 were in a rotated state for Examples 2 and 3 and Comparative examples 1 to 3. Further, the erected state meant a state that the left-eye lens 6L and the right-eye lens 6R were arranged along the horizontal direction X, and the rotated state meant a state that the left-eye lens 6L and the right-eye lens 6R were rotated by 20 deg from the erected state (FIG. 8). Further, as Comparative example 3, its measurement result in the case that a CCFL was used instead of the LED as a light source and the CCFL was lighted continuously (duty in lighting time period: 100%) is illustrated. In Comparative example 3, a high contract (CR=1000) entrance-side polarization plate of the shutter eyeglasses was used.

As illustrated in FIG. 7A, in erected state, the transmission axis of the panel exit-side polarization plate 2B corresponded with the transmission axis of the shutter entrance-side polarization plate 60A. Thus, eyeglasses contrast did not vary much according to difference of the contrast CR of the shutter entrance-side polarization plate 60A. As a result, almost no difference existed regarding crosstalk. Meanwhile, as illustrated in FIG. 7B, it was found that in the rotated state, as the contrast CR was lowered, the eyeglasses contrast was lowered, and crosstalk was increased associated therewith.

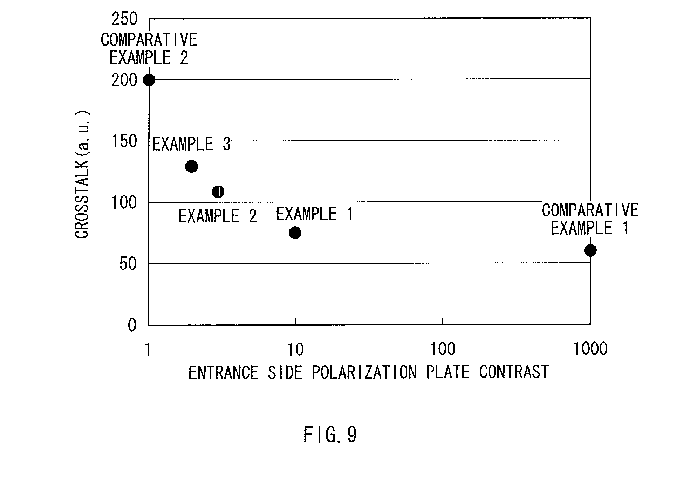

FIG. 9 illustrates a relation between the contrast CR of the shutter entrance-side polarization plate 60A and crosstalk in the rotated state (20 deg) as described above. As illustrated in FIG. 9, it was found that crosstalk was more increased as the contrast CR of the shutter entrance-side polarization plate 60A was lowered (Comparative example 2>Example 3>Example 2>Example 1>Comparative example 1).

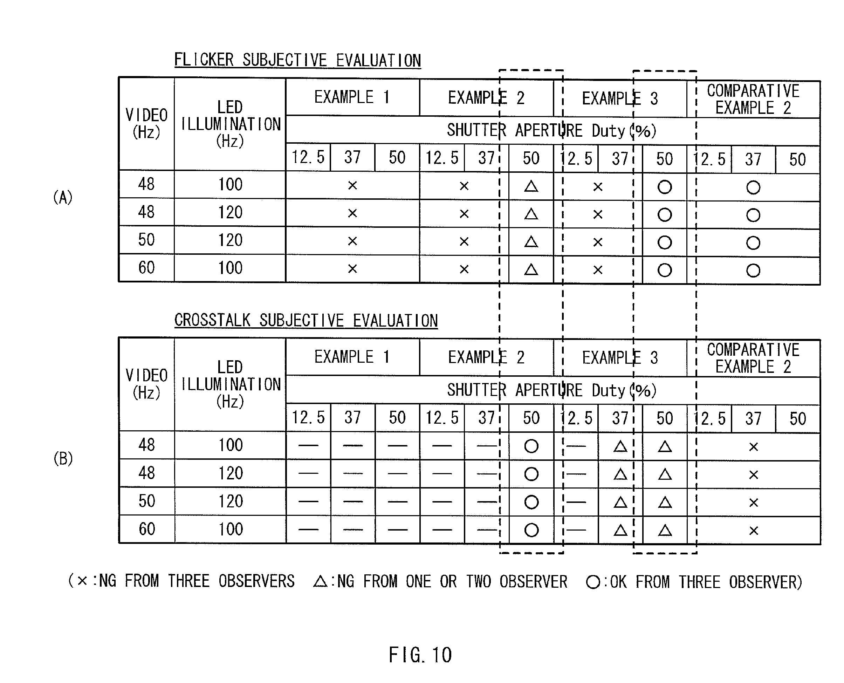

From the foregoing measurement result, it was found that flicker and crosstalk had trade-off relation as described above. Thus, in order to find effective solution in the contrast CR of the shutter entrance-side polarization plate 60A, the following subjective evaluation experiment was performed. In other words, in each case of Examples 1 to 3 and Comparative example 2, three observers actually wore the shutter eyeglasses 6 and observed a display video, and evaluated whether generated flicker and generated crosstalk were tolerable respectively. In the case where all three observers determined that the generated flicker and the generated crosstalk were tolerable was labeled as "o", at least one of the three observers determined that the generated flicker and the generated crosstalk were not tolerable was labeled as "Δ", and all three observers determined that the generated flicker and the generated crosstalk were not tolerable was labeled as "x". "-" means that no evaluation was made. Further, determination was made for respective cases that drive frequency of the display video (video) was 48 Hz, 50 Hz, and 60 Hz; drive frequency of room illumination (LED) was 100 Hz and 120 Hz; and the shutter aperture duty was 12.5%, 37%, and 50%. FIG. 10A illustrates evaluation result of flicker, and FIG. 10B illustrates evaluation result of crosstalk, respectively.

As a result of the subjective evaluation experiment, it was found that in Examples 2 and 3, in particular, in Examples 2 and 3 in which the shutter aperture duty was 50%, one or more observers determined that both generated flicker and the generated crosstalk were tolerable (in other words, determined as "o" or "Δ"). Thus, in the case where the contrast CR of the shutter entrance-side polarization plate 60A is, in particular, 3.2 and 2.2 and the shutter aperture duty is 50%, generation state of flicker and crosstalk is optimized, and both flicker and crosstalk are able to be decreased effectively.

Modified example

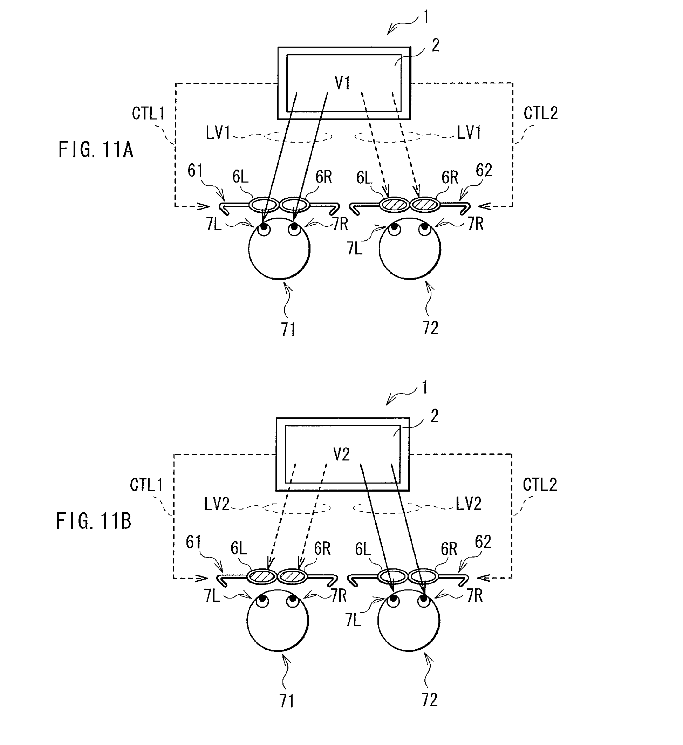

FIGS. 11A and 11B schematically illustrate general outline of video display operation in a video display system (multi view system) according to a modified example of the foregoing embodiment. In this modified example, video display operation capable of individually displaying a plurality of (two in this case) video streams that are different from each other to a plurality of observers (two observers in this case) is performed instead of the stereoscopic video display operation described above. For elements similar to those of the foregoing embodiment, the same referential symbols are affixed thereto, and description thereof is omitted as appropriate.

In the multi view system of this modified example, a first video based on a first video signal corresponding to a first observer and a second video based on a second video signal corresponding to a second observer are time-divisionally and alternately displayed. In other words, in the foregoing description, the left-eye video and the right-eye video corresponding to the left-eye lens 6L and the right-eye lens 6R in the shutter eyeglasses 6 are displayed respectively. Meanwhile, in this modified example, the respectively corresponding plurality of video streams is displayed for each corresponding observer (user).

Specifically, as illustrated in FIG. 11A, in the display time period of a first video V1, in shutter eyeglasses 61 used by an observer 71, both the right-eye lens 6R and the left-eye lens 6L are in open state by a control signal CTL1. Further, in shutter eyeglasses 62 used by an observer 72, both the right-eye lens 6R and the left-eye lens 6L are in closed state by a control signal CTL2. More specifically, display light LV1 based on the first video V1 is transmitted through the shutter eyeglasses 61 of the observer 71, and the display light LV1 is blocked in the shutter eyeglasses 62 of the observer 72.

Meanwhile, as illustrated in FIG. 11B, in the display time period of a second video V2, in the shutter eyeglasses 62 used by the observer 72, both the right-eye lens 6R and the left-eye lens 6L are in open state by the control signal CTL2. Further, in the shutter eyeglasses 61 used by the observer 71, both the right-eye lens 6R and the left-eye lens 6L are in closed state by the control signal CTL1. More specifically, display light LV2 based on the second video V2 is transmitted through the shutter eyeglasses 62 of the observer 72, and the display light LV2 is blocked in the shutter eyeglasses 61 of the observer 71.

By time-divisionally and alternately repeating the foregoing state, the two observers 71 and 72 are able to individually observe video streams (videos V1 and V2) different from each other.

In the video display system as in this modified example, by setting contrast of the foregoing shutter entrance-side polarization plate 60A low in the shutter eyeglasses 6, effect similar to that of the foregoing embodiment is able to be obtained.

In this modified example, the description has been given of the case that two video streams different from each other are individually observed by two observers. However, the present approach is able to be applied to a case that three or more video streams different from each other are individually observed by three or more observers. Further, the number of videos is not necessarily the same as the number of shutter eyeglasses. In other words, it may be possible that a plurality of shutter eyeglasses that perform open/closed operation corresponding to one video are prepared and a plurality of observers observe such one video.

While the description has been given with reference to the embodiment and the modified example, the present approach is not limited to the foregoing embodiment and the foregoing modified example, but various modifications may be made. For example, in the shutter eyeglasses 6, a phase difference plate such as a 1/4 λ plate may be inserted between the shutter entrance-side polarization plate and the shutter exit-side polarization plate. In the case where the polarization degree of the shutter entrance-side polarization plate 60A is set to a low value, the entire screen may be colored for the following reason. That is, in the case where the transmission axis in the panel exit-side polarization plate is shifted from the transmission axis in the shutter entrance-side polarization plate due to, for example, tilted head of an observer, double reflex is generated between light entering the shutter eyeglasses 6 and liquid crystal. In this case, if the phase difference plate is arranged as described above, coloring due to the foregoing transmission axis shift is able to be decreased.

Further, in the foregoing embodiment and the like, flicker degree depends on room illumination and the like. Thus, in order to optimize flicker and crosstalk to match with usage environment, a mechanism to mechanically or electrically adjust the contrast and the shutter aperture duty of the shutter entrance-side polarization plate 60A may be provided. Further, such adjustment may be made manually by an observer, or may be automatically made by a sensor or the like.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alternations may occur depending on design requirements and other factors insofar as they are within the scope of the appended claims or the equivalents thereof.

**Claims**

1. A video display system comprising:

   a video display unit time-divisionally for performing switching between a plurality of video streams to display the video streams, thereby emitting linear polarized display light; and
   shutter eyeglasses for performing switching between open state to transmit incident light and closed state to block the incident light in synchronization with the switching between the video streams in the video display unit, each eyeglass in the shutter eyeglasses including a liquid crystal device, an entrance-side polarization plate provided on a light entrance side of the liquid crystal device and an exit-side polarization plate provided on a light exit side thereof,

   wherein polarization degree in the entrance-side polarization plate is lower than that in the exit-side polarization plate.

2. The video display system according to claim 1, wherein the polarization degree in the entrance-side polarization plate is from 0.200 to 0.900 both inclusive.

3. The video display system according to claim 2, wherein the polarization degree in the exit-side polarization plate is 0.998 or more.

4. The video display system according to any preceding claim, wherein a phase difference plate is further provided between the entrance-side polarization plate and the exit-side polarization plate.

5. The video display system according to any preceding claim, wherein
   the plurality of video streams are configured of a left-eye video stream and a right-eye video stream, the video streams having a parallax therebetween, and
   the shutter eyeglasses have a left-eye liquid crystal device and a right-eye liquid crystal device, each controlled to alternately open and close in synchronization with switching of display between the left-eye video stream and the right-eye video stream.

6. A video display system comprising:

   a video display unit emitting linear polarized display light; and
   shutter eyeglasses switching transmittance thereof in regard to the display light, each eyeglass in the shutter eyeglasses including a liquid crystal device, a shutter-entrance-side polarization plate provided on a light entrance side of the liquid crystal device and a shutter-exit-side polarization plate provided on a light exit side thereof,

   wherein polarization degree in the shutter-entrance-side polarization plate is lower than that in the shutter-exit-side polarization plate.

EP 2 343 905 A2

FIG. 1

FIG. 2

FIG. 3A

FIG. 3B

TIME ANALYSIS

FREQUENCY ANALYSIS (CALCULATED)

F I G. 4A  SHUTTER EYEGLASSES
：48Hz

ILLUMINATED LIGHT
：60Hz

F I G. 4B  SHUTTER EYEGLASSES
：50Hz

ILLUMINATED LIGHT
：60Hz

F I G. 4C  SHUTTER EYEGLASSES
：60Hz

ILLUMINATED LIGHT
：50Hz

EP 2 343 905 A2

EP 2 343 905 A2

FIG. 5

EXAMPLE 1
EXAMPLE 2
COMPARATIVE EXAMPLE 1
COMPARATIVE EXAMPLE 2

LIGHT INTENSITY

$V_1$

$V_2$

t

LD RATIOS OF ILLUMINATED LIGHT $= \dfrac{V_1 - V_2}{\dfrac{V_1 + V_2}{2}} \times 100\%$

LD RATIOS OF ILLUMINATED LIGHT (%)

200
180
160
140
120
100
80
60
40
20
0

10    20    30    40    50

SHUTTER APERTURE DUTY (%)

14

FIG. 6

FIG. 7A  ERECTED STATE (0°)

FIG. 7B  ROTATED STATE (20°)

6L (6R)

ROTATED STATE

20°

ERECTED STATE

Y

X

FIG. 8

EP 2 343 905 A2

FIG. 9

18

FLICKER SUBJECTIVE EVALUATION

(A)

| VIDEO (Hz) | LED ILLUMINATION (Hz) | EXAMPLE 1 | | | EXAMPLE 2 | | | EXAMPLE 3 | | | COMPARATIVE EXAMPLE 2 | | |
|---|---|---|---|---|---|---|---|---|---|---|---|---|---|
| | | SHUTTER APERTURE Duty (%) | | | | | | | | | | | |
| | | 12.5 | 37 | 50 | 12.5 | 37 | 50 | 12.5 | 37 | 50 | 12.5 | 37 | 50 |
| 48 | 100 | × | | | × | | △ | × | | ○ | | ○ | |
| 48 | 120 | × | | | × | | △ | × | | ○ | | ○ | |
| 50 | 120 | × | | | × | | △ | × | | ○ | | ○ | |
| 60 | 100 | × | | | × | | △ | × | | ○ | | ○ | |

CROSSTALK SUBJECTIVE EVALUATION

(B)

| VIDEO (Hz) | LED ILLUMINATION (Hz) | EXAMPLE 1 | | | EXAMPLE 2 | | | EXAMPLE 3 | | | COMPARATIVE EXAMPLE 2 | | |
|---|---|---|---|---|---|---|---|---|---|---|---|---|---|
| | | SHUTTER APERTURE Duty (%) | | | | | | | | | | | |
| | | 12.5 | 37 | 50 | 12.5 | 37 | 50 | 12.5 | 37 | 50 | 12.5 | 37 | 50 |
| 48 | 100 | — | — | — | — | — | ○ | — | △ | △ | × | | |
| 48 | 120 | — | — | — | — | — | ○ | — | △ | △ | × | | |
| 50 | 120 | — | — | — | — | — | ○ | — | △ | △ | × | | |
| 60 | 100 | — | — | — | — | — | ○ | — | △ | △ | × | | |

(× :NG FROM THREE OBSERVERS    △ :NG FROM ONE OR TWO OBSERVER    ○ :OK FROM THREE OBSERVER)

FIG. 10

FIG. 11A

FIG. 11B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8327961 A